# EUROPÄISCHE PATENTANMELDUNG

(11) **EP 3 670 114 A1**
(43) Veröffentlichungstag der Anmeldung: **24.06.2020**
(21) Anmeldenummer: 19217970.3
(22) Anmeldetag: 19.12.2019
(51) Int. Cl.: B25J 15/00, B25J 19/00, B25J 9/10

(54) **GREIFELEMENT ZUM GREIFEN EINES OBJEKTS**

(30) Priorität: 21.12.2018 LU 101069
(71) Anmelder: eta | opt GmbH, 34127 Kassel (DE); Pohl, Christoph, 34560 Firtzlar (DE)
(72) Erfinder: Pohl, Christoph, 34560 Fritzlar (DE); Mechtold, Sascha, 34125 Kassel (DE); Kahlmeyer, Martin, 34125 Kassel (DE); Böhm, Stefan, 34125 Kassel (DE)
(74) Vertreter: Dennemeyer & Associates S.A.

(57) **Zusammenfassung**

Die Erfindung betrifft ein Greifelement zum Greifen eines Objekts, mit einem thermoplastischen Kunststoff, der von einem Ausgangszustand, bei dem keine kraft- und/oder formschlüssige Verbindung zwischen dem thermoplastischen Kunststoff und dem Objekt besteht, in einen Greifzustand, bei dem eine kraft- und/oder formschlüssige Verbindung zwischen dem thermoplastischen Kunststoff und dem Objekt besteht, und von dem Greifzustand zurück in den Ausgangszustand überführbar ist.

## Beschreibung

Die Erfindung betrifft ein Greifelement zum Greifen eines Objekts. Außerdem betrifft die Erfindung eine Greifvorrichtung mit einem solchen Greifelement. Darüber hinaus betrifft die Erfindung ein Verfahren zum Greifen eines Objekts.

Aus dem Stand der Technik ist eine Vielzahl von Greifvorrichtungen bekannt, mittels denen Objekte gegriffen und von einer Istposition zu einer Sollposition transportiert werden können. So sind Greifvorrichtungen bekannt, bei denen der Greifvorgang mittels eines Adhäsionsmittels durchgeführt wird. Derartige Greifvorrichtungen beschränken sich auf die Handhabung und Positionierung kleiner Teile in der Größenordnung weniger Millimeter sowie auf das Greifen und die Handhabung biegeschlaffer Halbzeuge, im Wesentlichen Textilhalbzeuge.

Außerdem sind Greifvorrichtungen bekannt, bei denen ein Flüssigkeitsfilm, in der Regel Wasser, zwischen einem Greifelement und dem zu greifenden Objekt gebracht und gefroren wird. Durch überwiegend stoffschlüssige Kraftübertragung über das gefrorene Wasser, das ähnlich einem Klebstoff wirkt, wird das zu greifende Objekt gegriffen und in die gewünschte Lage bewegt und durch Auftauen des Wassers wieder freigegeben.

Nachteilig bei den bekannten Greifvorrichtungen ist, dass sie nicht flexibel einsetzbar sind. So sind die Greifvorrichtungen üblicherweise auf eine Geometrie des zu greifenden Objekts hin entwickelt und/oder deren Einsatz hängt von der Oberflächenbeschaffenheit des zu greifenden Objekts ab.

Die Aufgabe der Erfindung besteht daher darin, ein Greifelement bereitzustellen, das flexibel einsetzbar ist.

Die Aufgabe wird gelöst durch ein Greifelement zum Greifen eines Objekts, mit einem thermoplastischen Kunststoff, der von einem Ausgangszustand, bei dem keine kraft- und/oder formschlüssige Verbindung zwischen dem thermoplastischen Kunststoff und dem Objekt besteht, in einen Greifzustand, bei dem eine kraft- und/oder formschlüssige Verbindung zwischen dem thermoplastischen Kunststoff und dem Objekt besteht, und von dem Greifzustand zurück in den Ausgangszustand überführbar ist.

Eine weitere Aufgabe der Erfindung besteht darin, ein Verfahren anzugeben, mittels dem unterschiedlich ausgebildete Objekte gegriffen werden können.

Die Aufgabe wird gelöst durch ein Verfahren zum Greifen eines Objekts mittels eines Greifelements, das einen thermoplastischen Kunststoff aufweist, wobei das Verfahren folgende Schritte aufweist:
a. Überführen des thermoplastischen Kunststoffs von einem Ausgangszustand, bei dem keine kraft- und/oder formschlüssige Verbindung zwischen dem thermoplastischen Kunststoff und dem Objekt besteht, in einen Greifzustand, bei dem eine kraft- und/oder formschlüssige Verbindung zwischen dem thermoplastischen Kunststoff und dem Objekt besteht, und
b. Überführen des thermoplastischen Kunststoffs von dem Greifzustand zurück in den Ausgangszustand.

Das erfindungsgemäße Greifelement weist den Vorteil auf, dass das Greifelement flexibel einsetzbar ist. So ist ein Greifen des Objekts unabhängig von der Objektgeometrie und/oder der Oberflächenbeschaffenheit des Objekts möglich. Die flexible Einsetzbarkeit des Greifelements ist möglich, weil der thermoplastische Kunststoff derart ausgebildet ist, dass er von dem Greifzustand wieder zurück in den Ausgangszustand überführt werden kann.

Ein thermoplastischer Kunststoff ist ein Kunststoff, der sich in einem bestimmten Temperaturbereich verformen lässt. Dieser Vorgang ist reversibel, sodass er durch Abkühlung oder Erwärmung beliebig oft wiederholt werden kann. Dabei geht der Kunststoff bei Überschreiten einer Glasübergangstemperatur von einem festen Zustand in einen gummiartigen bis zähflüssigen Zustand über und geht bei Unterschreiten der Glasübergangstemperatur von dem gummiartigen bis zähflüssigen Zustand in den festen Zustand über.

Bei dem Greifzustand besteht eine kraft- und/oder formschlüssige Verbindung zwischen dem Objekt und dem thermoplastischen Kunststoff. Daher kann das Greifelement im Greifzustand das Objekt von einer Istposition zu einer Sollposition bewegen. Dabei kann die Bewegung des Objekts in wenigstens einer, vorzugsweise drei, Raumrichtungen erfolgen. Dabei kann das Objekt mittels des Greifelements und der nachfolgend näher beschriebenen Greifvorrichtung linear bewegt und/oder gedreht werden.

Bei dem Ausgangszustand besteht zwischen dem Objekt und dem thermoplastischen Kunststoff keine kraft- und/oder formschlüssige Verbindung. Somit ist das Objekt freigegeben und kann durch das Greifelement oder die Greifvorrichtung nicht bewegt werden.

Bei einer besonderen Ausführung kann zum Überführen des thermoplastischen Kunststoffs von dem Ausgangszustand in den Greifzustand der thermoplastische Kunststoff aufgeheizt werden. Anschließend kann der thermoplastische Kunststoff mit dem Objekt in Kontakt gebracht werden. Daraufhin kann der thermoplastische Kunststoff zum Herstellen einer kraft- und/oder formschlüssigen Verbindung zwischen dem thermoplastischen Kunststoff und dem Objekt abgekühlt werden.

Auf diese Weise kann das Überführen des thermoplastischen Materials von dem Ausgangszustand in den Greifzustand auf besonders einfache Weise erfolgen. Insbesondere kann das Überführen des thermoplastischen Kunststoffs von dem Ausgangszustand in den Greifzustand, insbesondere das Herstellen der kraft- und/oder formschlüssigen Verbindung zwischen dem thermoplastischen Kunststoff und dem Objekt, durch Steuern oder Regeln der Temperatur des thermoplastischen Kunstoffs realisiert werden.

Dabei kann der thermoplastische Kunststoff vor dem Herstellen des Kontakts zwischen dem thermoplastischen Kunststoff und dem Objekt auf eine Temperatur aufgeheizt werden, die größer als eine Glasübergangstemperatur des thermoplastischen Kunststoffs ist. Dies bietet den Vorteil, dass der thermoplastische Kunststoff nach dem Aufheizvorgang in einem zähflüssigen Zustand vorliegt, sodass das anschließende in Kontakt bringen des thermoplastischen Kunststoffs und dem Objekt auf einfache Weise hergestellt werden kann.

Beim Überführen in den Greifzustand kann der thermoplastische Kunststoff, der im zähflüssigen Zustand vorliegt, mit dem Objekt in Kontakt gebracht werden. Dabei wird das Objekt gegen einen Materialabschnitt des thermoplastischen Kunststoffs gedrückt. Da der thermoplastische Kunststoff in zähflüssiger Form vorliegt, gibt der Materialabschnitt des thermoplastischen Kunststoffs nach, sodass das Objekt in den thermoplastischen Kunststoff eingebracht wird. Nach dem Einbringen des Objekts in den thermoplastischen Kunststoff kann der thermoplastische Kunststoff das Objekt teilweise umschließen.

Die Materialverdrängung erfolgt, weil der thermoplastische Kunststoff aus einem Vollmaterial bestehen kann und somit keine Aussparungen aufweist, in die das Objekt eingebracht wird. Nach dem in Kontakt bringen, kann das Objekt derart in den thermoplastischen Kunststoff eingebracht sein, dass ein Teil des Objekts von dem thermoplastischen Kunststoff vorragt.

Der Kontakt zwischen dem thermoplastischen Kunststoff und dem Objekt kann dadurch hergestellt werden, dass das Greifelement und/oder das Objekt derart bewegt werden, dass das Objekt, wie zuvor beschriebene wurde, in den thermoplastischen Kunststoff eingebracht wird. Das Einbringen kann auf besonders einfache Weise dadurch realisiert werden, indem das Objekt und/oder das Greifelement relativ zueinander bewegt werden. Vorzugsweise kann das Greifelement relativ zu dem Objekt bewegt werden. Dabei kann das Greifelement linear bewegt werden.

Die kraft- und/oder formschlüssige Verbindung kann im nächsten Schritt auf einfache Weise durch Abkühlen des thermoplastischen Materials auf eine Temperatur, die unter die Glasübergangstemperatur liegt, realisiert werden. Dabei hängt es von der Objektgeometrie ab, ob eine kraftschlüssige und/oder eine formschlüssige Verbindung realisiert wird. Nach dem Abkühlvorgang befindet sich der thermoplastische Kunststoff im Greifzustand.

Bei einem Überführen des thermoplastischen Kunststoffs von dem Greifzustand zurück in den Ausgangszustand kann der thermoplastische Kunststoff aufgeheizt und anschließend der Kontakt zwischen dem thermoplastischen Kunststoff und dem Objekt gelöst werden. Dabei kann der thermoplastische Kunststoff vordem Lösen des Kontakts zwischen dem thermoplastischen Kunststoff und dem Objekt auf eine Temperatur aufgeheizt werden, die größer als die Glasübergangstemperatur des thermoplastischen Kunststoffs ist.

Durch ein derartiges Aufheizen des thermoplastischen Kunststoffs wird ein Lösen des Kontakts zwischen dem thermoplastischen Kunststoff und dem Objekt auf einfache Weise möglich. Insbesondere besteht bei einer Temperatur des thermoplastischen Kunststoffs, die über der Glasübergangstemperatur des thermoplastischen Kunststoffs liegt, keine form- und/oder kraftschlüssige Verbindung mehr zwischen dem thermoplastischen Kunststoff und dem Objekt. Daher kann das Lösen des thermoplastischen Kunststoffs von dem Objekt auf einfache Weise erfolgen.

Dabei kann der Kontakt zwischen dem thermoplastischen Kunststoff und dem Objekt auf einfache Weise gelöst werden, indem das Greifelement und/oder das Objekt derart bewegt werden, dass das Objekt aus dem thermoplastischen Kunststoff heraustritt und/oder keinen Materialabschnitt des thermoplastischen Kunststoffs verdrängt. Insbesondere übt das Objekt keinen Druck mehr auf den thermoplastischen Kunststoff aus. Dazu kann das Greifelement in eine Richtung weg von dem Objekt bewegt werden. Insbesondere kann das Greifelement linear bewegt werden. Alternativ oder zusätzlich kann das Objekt in eine Richtung weg von dem thermoplastischen Kunststoff bewegt werden. Dabei kann die Bewegung des Greifelements entgegengesetzt gerichtet sein zu der Bewegung des Greifelements bei dem Überführen des thermoplastischen Kunststoffs von dem Ausgangszustand zu dem Greifzustand.

Bei einer besonderen Ausführung kann der thermoplastische Kunststoff ein thermoplastischer Kunststoff mit Formgedächtniseigenschaft ist. Ein derartiger thermoplastischer Kunststoff kann durch ein entsprechendes Herstellverfahren realisiert werden. So muss der thermoplastische Kunststoff unter hohem Druck und hoher Temperatur hergestellt werden. Vorzugsweise wird der thermoplastische Kunststoff bei der Herstellung zwischen zwei Platten eingebracht. Dabei sind die bei der Herstellung auftretenden Drücke und Temperaturen höher als die beim Greifvorgang auftretenden Drücke und Temperaturen.

Durch die Formgedächtniseigenschaft weist der thermoplastische Kunststoff im Ausgangszustand immer die gleiche Ausbildung auf. Dies ist insofern von Vorteil, weil der thermoplastische Kunststoff im Ausgangszustand derart ausgebildet sein kann, dass er eine Vielzahl von Objekten mit unterschiedlichen Geometrien greifen kann. Insbesondere kann der thermoplastische Kunststoff nach Greifen eines Objekts und nach einem anschließenden Überführen in den Ausgangszustand problemlos ein anderes Objekt mit einer anderen Geometrie greifen.

Der thermoplastische Kunststoff kann eine im Querschnitt im Wesentlichen rechteckige, insbesondere rechteckige, Kontur aufweisen. Ein derart ausgebildeter thermoplastischer Kunststoff ermöglicht, dass eine Vielzahl von unterschiedlich ausgebildeten Objekten gegriffen werden können.

Der thermoplastische Kunststoff kann ein Paraffin sein. Paraffin weist den Vorteil auf, dass die Glasübergangstemperatur nicht allzu hoch ist, sodass die zum Aufheizen benötigte Wärmemenge nicht hoch ist.

Bei einer besonderen Ausführung kann das Greifelement ein Heizelement zum Aufheizen des thermoplastischen Kunststoffs aufweisen. Das Heizelement kann als Heizdraht ausgebildet sein. Darüber hinaus kann sich das Heizelement wenigstens teilweise durch den thermoplastischen Kunststoff erstrecken. Das Heizelement ermöglicht, dass das Aufheizen des thermoplastischen Materials auf einfache Weise und schnell erfolgen kann.

Der thermoplastische Kunststoff kann einen wärmeleitenden Füllstoff aufweisen. Alternativ oder zusätzlich kann der thermoplastische Kunststoff Graphitfasern aufweisen. Der Füllstoff und/oder die Graphitfasern weisen den Vorteil auf, dass sie Wärme gut leiten. Dies ist insofern vorteilhaft, weil der Greifvorgang in einigen Industriebereichen zeitkritisch ist und daher ein besonders schnelles Aufheizen und Abkühlen des thermoplastischen Kunststoffs benötigt wird.

Das Greifelement kann einen Thermoplasthalter zum Halten des thermoplastischen Kunststoffs aufweisen. Dabei kann der thermoplastische Kunststoff mit dem Thermoplasthalter fest verbunden sein. Insbesondere kann der thermoplastische Kunststoff mit dem Thermoplasthalter stoffschlüssig verbunden sein. Im Ergebnis kann ein einfach aufgebautes Greifelement bereitgestellt werden.

Bei einer besonderen Ausführung kann das Greifelement ein Antiadhäsionsmittel zum Verhindern einer Adhäsion zwischen dem thermoplastischen Kunststoff und dem Objekt aufweisen. Das Antiadhäsionsmittel ist von Vorteil, wenn mittels des Greifelements das gegriffene Objekt genau platziert werden muss. Insbesondere wird durch das Antiadhäsionsmittel verhindert, dass aufgrund einer stoffschlüssigen Verbindung zwischen dem gegriffenen Objekt und dem thermoplastischen Kunststoff das Objekt nicht in einer Sollposition abgelegt werden kann. Das Antiadhäsionsmittel kann den thermoplastischen Kunststoff wenigstens teilweise ummanteln. Darüber hinaus kann der thermoplastische Kunststoff mit dem Antiadhäsionsmittel wenigstens teilweise beschichtet sein.

Von besonderem Vorteil ist eine Greifvorrichtung mit einem erfindungsgemäßen Greifelement. Darüber hinaus ist von besonderem Vorteil ein Verfahren zum Greifen des Objekts, das ein erfindungsgemäßes Greifelement oder eine Greifvorrichtung verwendet.

Die Greifvorrichtung weist einen Halter auf, wobei das Greifelement mit dem Halterwirkverbunden ist. Die Wirkverbindung kann derart ausgebildet sein, dass das Greifelement einer Bewegung des Halters folgt. Insbesondere kann dadurch auf einfache Weise sichergestellt werden, dass nach dem Herstellen der kraft- und/oder formschlüssigen Verbindung zwischen dem thermoplastischen Kunststoff und dem Objekt das Objekt mittels der Greifvorrichtung zu einer Sollposition transportiert werden kann.

Der Thermoplasthalter kann mit dem Halter wieder lösbar wirkverbunden sein. Dies bietet den Vorteil, dass beispielsweise bei einem defekten Greifelement nur das Greifelement ausgebaut werden muss und nicht die gesamte Greifvorrichtung.

Bei einer besonderen Ausführung kann die Greifvorrichtung eine Kühleinrichtung zum Kühlen des Greifelements, insbesondere des thermoplastischen Kunststoffs, und/oder eine Heizeinrichtung zum Heizen des Greifelements, insbesondere des thermoplastischen Kunststoffs aufweisen. Dadurch kann der oben beschriebene Greifvorgang, bei dem das Überführen des thermoplastischen Kunststoffs von dem Ausgangszustand in den Greifzustand oder umgekehrt durch Steuern oder Regeln der Temperatur erfolgt, auf einfache Weise durchgeführt werden.

Eine besonders kompakte Greifvorrichtung wird realisiert, wenn die Greifvorrichtung ein Peltierelement aufweist. Das Peltierelement fungiert in diesem Fall als Heizeinrichtung und/oder als Kühleinrichtung. Das Peltierelement kann mit dem Greifelement wärmeleitend verbunden sein. Dabei kann das Peltierelement mit dem Greifelement kraft und/oder formschlüssig verbunden sein. Eine wärmeleitende Verbindung zwischen dem Greifelement und dem Peltierelement liegt vor, wenn der Wärmefluss zwischen dem Greifelement und dem Peltierelement nicht durch einen Gasbereich unterbrochen ist.

Die Greifvorrichtung kann außerdem eine weitere Kühleinrichtung aufweisen. Die weitere Kühleinrichtung kann einen Lüfter aufweisen.

Darüber hinaus kann die Greifvorrichtung einen Kühlkörper aufweisen, der mit dem Greifelement wärmeleitend verbunden ist. Eine wärmeleitende Verbindung zwischen dem Kühlkörper und dem Greifelement liegt vor, wenn der Wärmefluss zwischen dem Greifelement und dem Kühlkörper nicht durch einen Gasbereich unterbrochen ist, sondern durch Festkörper erfolgt. Dabei kann der Kühlkörper mittelbar mit dem Greifelement wärmeleitend verbunden werden. So kann der Wärmefluss von dem Greifelement über das Peltierelement zu dem Kühlkörper erfolgen, ohne das der Wärmefluss durch einen Gasbereich unterbrochen ist.

Die weitere Kühleinrichtung kann derart angeordnet sein, dass sie den Kühlkörper, insbesondere konvektiv, kühlt. Dabei kann der Kühlkörper zur Oberflächenvergrößerung und damit zur Verbesserung der Wärmeabgabe eine Vielzahl von Kühlrippen aufweisen.

Der Kühlkörper kann mit dem Halter wirkverbunden sein. Dabei kann der Kühlkörper wenigstens teilweise in einem Hohlraum des Halters angeordnet sein. Dadurch ist eine kompakte Bauweise der Greifvorrichtung möglich.

Die Greifvorrichtung kann eine Verfahreinrichtung zum Verfahren des Halters aufweisen. Dadurch kann das Objekt auf einfache Weise von der Istpostion, bei der das Objekt durch das Greifelement gegriffen wird, zu einer Sollposition transportiert werden.

Darüber hinaus kann die Greifvorrichtung eine, insbesondere elektrische, Steuervorrichtung zum Steuern der Heizeinrichtung und/oder der Kühleinrichtung und/oder der weiteren Kühleinrichtung und/oder des Heizelements und/oder der Verfahreinrichtung aufweisen.

Dabei kann die Steuervorrichtung derart ausgebildet sein, dass sie das oben beschriebene Überführen des thermoplastischen Kunststoffs von dem Ausgangszustand in den Greifzustand veranlasst. Insbesondere kann die Steuervorrichtung ein Aufheizen des thermoplastischen Kunststoffs und ein anschließendes in Kontakt bringen des thermoplastischen Kunststoffs mit dem Objekt veranlassen. Darüber hinaus kann die Steuervorrichtung veranlassen, dass der thermoplastische Kunststoff auf eine Temperatur oberhalb der Glasübergangstemperatur aufgeheizt wird. Zum Realisieren des Inkontaktbringens des thermoplastischen Kunststoffs mit dem Objekt kann die Steuervorrichtung die Verfahreinrichtung ansteuern, um eine Bewegung des Greifelements zu veranlassen. Darüber hinaus kann die Steuervorrichtung veranlassen, dass anschließend ein Abkühlen des thermoplastischen Kunststoffs auf eine Temperatur unterhalb der Glasübergangstemperatur erfolgt, um die kraft- und/oder formschlüssige Verbindung zwischen dem thermoplastischen Kunststoff und dem Objekt herzustellen.

Die Steuervorrichtung kann außerdem ein Überführen des thermoplastischen Kunststoffs von dem Greifzustand in den Ausgangszustand veranlassen. Dazu kann die Steuervorrichtung veranlassen, dass der thermoplastische Kunststoff auf eine Temperatur oberhalb der Glasübergangstemperatur aufgeheizt wird. Anschließend kann die Steuervorrichtung die Verfahreinrichtung ansteuern, um eine Bewegung des Greifelements zu veranlassen, um den Kontakt zwischen dem thermoplastischen Kunststoff und dem Objekt zu lösen.

Die Greifvorrichtung kann Sensoren, insbesondere Temperatursensoren, aufweisen, die mit der Steuervorrichtung elektrisch verbunden sind. Somit kann eine Regelung des Aufheiz- oder Abkühlvorgangs des thermoplastischen Kunststoffs auf einfache Weise erfolgen.

Die Steuervorrichtung ermöglicht, dass der Greifvorgang automatisch durchgeführt werden kann. Insbesondere kann das Verfahren zum Greifen des Objekts automatisch durchgeführt werden. Automatisch bedeutet, dass der Greifvorgang ohne Einwirken eines Benutzers durchgeführt werden kann.

Das zu greifende Objekt kann ein Gewicht von 5 Gramm bis 50 Kilogramm aufweisen. Dabei kann das zu greifende Objekt ein, insbesondere beliebig ausgebildetes, Werkstück sein.

Die Greifvorrichtung kann in Produktionsbetrieben und/oder Industriebetrieben eingesetzt werden. Insbesondere kann die Greifvorrichtung bei einer Handhabungsvorrichtung und/oder Automatisierungsvorrichtung verwendet werden. Dabei kann die Handhabungsvorrichtung und/oder die Automatisierungsvorrichtung die Greifvorrichtung aufweisen. Vorzugsweise kann ein Roboter und/oder ein Portalsystem, insbesondere ein drei Achsen Portalsystem, die Greifvorrichtung aufweisen.

In den Figuren ist der Erfindungsgegenstand schematisch dargestellt, wobei gleiche oder gleichwirkende Elemente zumeist mit denselben Bezugszeichen versehen sind. Dabei zeigt:
Figur 1 ein erfindungsgemäßes Greifelement bei einem Ausgangszustand und ein Objekt gemäß einer ersten Ausführung,
Figur 2 das in Figur 1 gezeigte Greifelement in einem Zustand, bei dem ein Kontakt zwischen dem Greifelement und dem Objekt besteht,
Figur 3 das in Figur 1 gezeigte Greifelement, bei einem Greifzustand
Figur 4 das in Figur 1 gezeigte Greifelement bei einem Ausgangszustand und ein Objekt gemäß einer zweiten Ausführung,
Figur 5 das in Figur 4 gezeigte Greifelement in einem Zustand, bei dem ein Kontakt zwischen dem Greifelement und dem Objekt besteht,
Figur 6 das in Figur 4 gezeigte Greifelement bei einem Greifzustand,
Figur 7 einen Teil einer erfindungsgemäßen Greifvorrichtung.

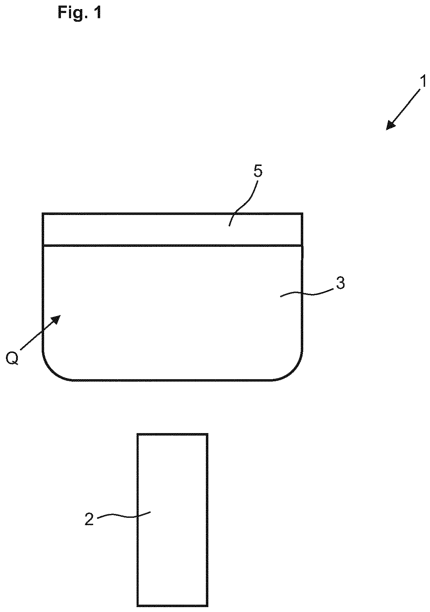

Figur 1 zeigt ein erfindungsgemäßes Greifelement 1 und ein zu greifendes Objekt 2. Das Greifelement 1 weist einen thermoplastischen Kunststoff 3 und einen Thermoplasthalter 5 auf. Der Thermoplasthalter 5 hält den thermoplastischen Kunststoff 3. Dabei ist der thermoplastische Kunststoff 3 fest mit dem Thermoplasthalter 5 verbunden.

Figur 1 zeigt dabei einen Ausgangszustand des Greifelements 1. Beim Ausgangszustand besteht keine kraft- und/oder formschlüssige Verbindung zwischen dem thermoplastischen Kunststoff 3 und dem Objekt 2. Dies ist aus Figur 1 dadurch ersichtlich, dass das Greifelement 1 und das Objekt 2 beabstandet zueinander angeordnet sind.

Damit der thermoplastische Kunststoff 3 von dem Ausgangszustand in einen Greifzustand überführt werden kann, muss der thermoplastische Kunststoff 3 aufgeheizt werden. Die Wärmezufuhr in den thermoplastischen Kunststoff 3 ist in Figur 1 durch den mit Q bezeichneten Pfeil symbolisiert. Dabei wird der thermoplastische Kunststoff 3 auf eine Temperatur aufgeheizt, die oberhalb einer Glasübergangstemperatur des thermoplastischen Kunststoffs 3 ist. Bei einer derartigen Temperatur ist der thermoplastische Kunststoff 3 zähflüssig.

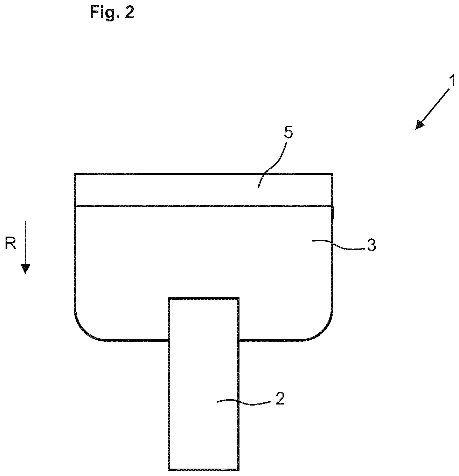

Figur 2 zeigt das Greifelement 1 in einem Zustand, bei dem ein Kontakt zwischen dem thermoplastischen Kunststoff 3 und dem Objekt 2 besteht. Zum Herstellen des Kontakts zwischen dem thermoplastischen Kunststoff 3 und dem Objekt 2 wird das Greifelement 1 in Verschieberichtung abgesenkt.

Da der thermoplastische Kunststoff 3 nach dem Aufheizvorgang in zähflüssiger Form vorliegt, kann ein Materialabschnitt des thermoplastischen Kunststoffs 3 beim Absenken des Greifelements 1 durch das Objekt 2 verdrängt werden. Insbesondere kann sich der thermoplastische Kunststoff 3 aufgrund des verdrängten Materialabschnitts zur Seite hin verbreitern, was in den Figuren jedoch nicht dargestellt ist. Nach dem Absenkvorgang ist ein Teil des Objekts 2 von dem thermoplastischen Kunststoff 3 vollständig umschlossen. In anderen Worten der thermoplastische Kunststoff 3 ist in direktem Kontakt mit einem Teil des Objekts 2. Bei dem in Figur 2 dargestellten Zustand besteht jedoch keine kraftschlüssige Verbindung zwischen dem thermoplastischen Kunststoff 3 und dem Objekt 2.

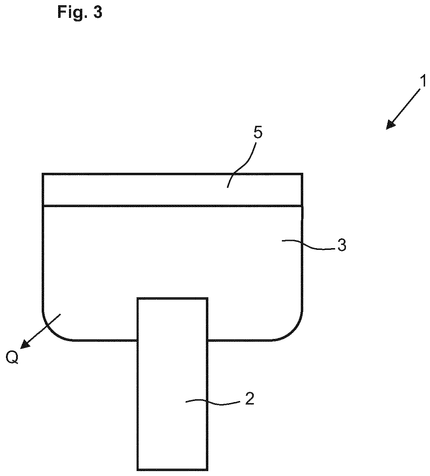

Figur 3 zeigt das Greifelement 1 in dem Greifzustand. In dem Greifzustand besteht eine kraftschlüssige Verbindung zwischen dem thermoplastischen Kunststoff 3 und dem Objekt 2.

Damit der thermoplastische Kunststoff 3 ausgehend von dem in Figur 2 gezeigten Zustand in einen Greifzustand überführt wird, muss der thermoplastische Kunststoff 3 abgekühlt werden. Insbesondere muss der thermoplastische Kunststoff 3 auf eine Temperatur abgekühlt werden, die unterhalb der Glasübergangstemperatur liegt. Durch Abkühlen des thermoplastischen Kunststoffs 3 wird eine kraftschlüssige Verbindung zwischen dem thermoplastischen Kunststoff 3 und dem Objekt 2 hergestellt. Die Wärmeabfuhr ist in Figur 3 durch den mit Q bezeichneten Pfeil symbolisiert. Nach dem Herstellen der kraftschlüssigen Verbindung zwischen dem Objekt 2 und dem thermoplastischen Kunststoff 3 kann das Objekt in die gewünschte Sollposition transportiert werden.

Ausgehend von dem in Figur 3 dargestellten Greifzustand kann der thermoplastische Kunststoff 3 wieder in den in Figur 1 dargestellten Ausgangszustand überführt werden. Dazu wird der thermoplastische Kunststoff 3 aufgeheizt.

Insbesondere wird der thermoplastische Kunststoff 3 auf eine Temperatur aufgeheizt, die oberhalb der Glasübergangstemperatur des thermoplastischen Kunststoffs 3 liegt. Durch Aufheizen des thermoplastischen Kunststoffs 3 auf eine Temperatur oberhalb der Glasübergangstemperatur wird die kraftschlüssige Verbindung zwischen dem thermoplastischen Kunststoff 3 und dem Objekt 2 gelöst. In anderen Worten, es wird der in Figur 2 gezeigte Zustand realisiert. Anschließend wird das Greifelement 1 in eine Richtung weg von dem Objekt 2 bewegt. Insbesondere wird das Greifelement 1 entgegen der in Figur 2 gezeigten Verschieberichtung R bewegt. Im Anschluss an die, insbesondere lineare, Bewegung des Greifelements 1 befindet sich das Greifelement 1 in dem in Figur 1 dargestellten Ausgangszustand.

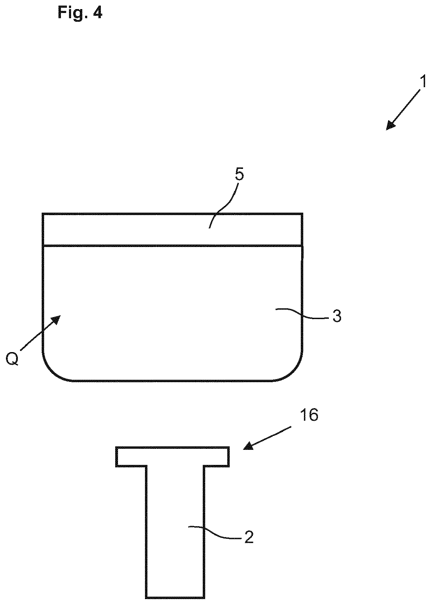

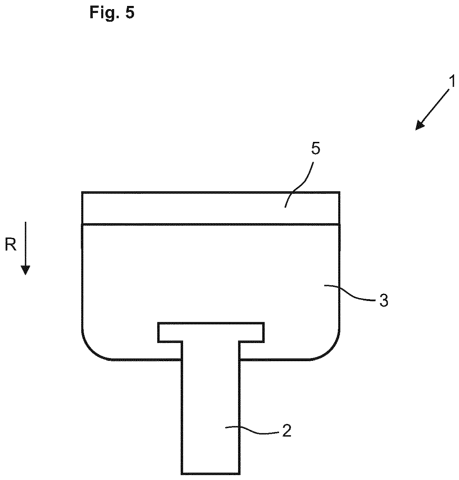

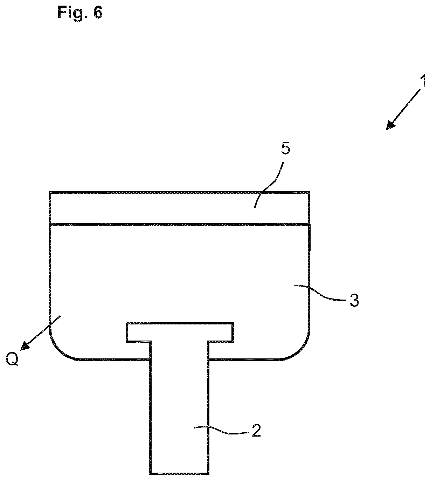

Figur 4 zeigt das in Figur 1 gezeigte Greifelement 1 bei einem Ausgangszustand und ein Objekt 2 gemäß einer zweiten Ausführung. Figur 5 zeigt das in Figur 4 gezeigte Greifelement in einem Zustand, bei dem ein Kontakt zwischen dem Objekt 2 und dem thermoplastischen Kunststoff 2 besteht. Figur 6 zeigt das in Figur 4 gezeigte Greifelement bei einem Greifzustand.

Bei der in den Figuren 4 bis 6 gezeigten Ausführung erfolgt das Überführen des thermoplastischen Kunststoffs 3 von dem in Figur 4 gezeigten Ausgangszustand in den in Figur 6 gezeigten Greifzustand analog zu der in den Figuren 1 bis 3 dargestellten Ausführung. Außerdem erfolgt das Überführen des thermoplastischen Kunststoffs 3 von dem in Figur 6 Greifzustand in den in den Figur 4 gezeigten Ausgangszustand analog zu der in den Figuren 1 bis 3 gezeigten Ausführung.

Die in den Figuren 4 bis 6 gezeigte Ausführung unterscheidet sich von der in Figur 1 bis 3 gezeigten Ausführung in der Ausbildung des Objekts 2. So weist das Objekt 2 einen T-förmigen Endabschnitt 16 auf. Der T-förmige Endabschnitt 16 drückt bei einem Absenken des Greifelements 1 in Verschieberichtung R gegen den thermoplastischen Kunststoff 3 und bewirkt, dass ein Materialabschnitt des thermoplastischen Kunststoffs 3 verdrängt wird.

Nach einer in Figur 6 gezeigten Wärmeabfuhr besteht eine feste Verbindung zwischen dem Objekt 2 und dem thermoplastischen Kunststoff 3. Infolge des T-förmigen Endabschnitts 16 besteht im Gegensatz zu der in den Figuren 1 bis 3 gezeigten Ausführung eine formschlüssige Verbindung zwischen dem thermoplastischen Kunststoff 3 und dem Objekt 2.

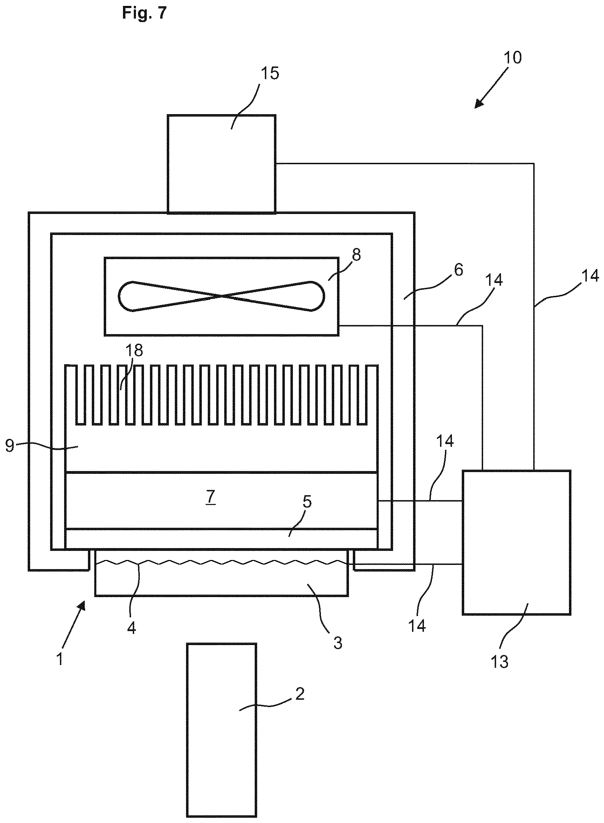

Figur 7 zeigt einen Teil der Greifvorrichtung 10. Die Greifvorrichtung 10 weist das Greifelement 1 auf, das mit einem Halter 6 der Greifvorrichtung 10 wirkverbunden ist. Die Wirkverbindung ist derart ausgeführt, dass das Greifelement 1 einer Bewegung des Halters 6 folgt. Das Greifelement 1 ist mit dem Halter 6 wieder lösbar wirkverbunden, sodass es durch ein anderes in den Figuren nicht dargestelltes Greifelement 1 ausgetauscht werden kann.

Das Greifelement 1 weist außerdem einen Heizelement 4 in Form eines Heizdrahts auf, der sich teilweise durch den thermoplastischen Kunststoff 3 erstreckt. Dabei ist der Heizdraht mittels einer elektrischen Leitung 14 mit einer Steuervorrichtung 13 der Greifvorrichtung 10 elektrisch verbunden.

Das Greifelement 1, insbesondere der Thermoplasthalter 5, ist mit einem Peltierelement 7 der Greifvorrichtung 10, insbesondere formschlüssig, verbunden. Dabei ist das Peltierelement 7 derart angeordnet, dass eine Wärmeleitung zwischen dem Peltierelement 7 und dem Greifelement 1 erfolgt. Das Peltierelement 7 ist ebenfalls mittels einer elektrischen Leitung 14 mit der Steuervorrichtung 13 elektrisch verbunden.

Die Greifvorrichtung 10 weist außerdem einen Kühlkörper 9 und eine weitere Kühleinrichtung 8 auf. Die weitere Kühleinrichtung 8 ist als ein Lüfter ausgebildet und dient zum Kühlen des Kühlkörpers 9. Der Kühlkörper 9 ist in einem Hohlraum 17 des Halters 6 angeordnet und mit dem Halter 6 wirkverbunden. Darüber hinaus ist der Kühlkörper 9 mit dem Greifelement 1 wärmeleitend verbunden. Insbesondere ist der Kühlkörper 9 mittels des Peltierelements 7 mit dem Greifelement 1 mittelbar wärmeleitend verbunden.

Der Kühlkörper 9 weist eine Vielzahl von Kühlrippen 18 auf, die der weiteren Kühleinrichtung 8 zugewandt sind und durch die weitere Kühleinrichtung 8 gekühlt werden. Die weitere Kühleinrichtung 8 kann ebenfalls mittels einer elektrischen Leitung 14 mit der Steuervorrichtung 13 elektrisch verbunden sein.

Die Greifvorrichtung 10 weist außerdem eine Verfahreinrichtung 15 auf, die in Figur 7 nur teilweise dargestellt ist. Mittels der Verfahreinrichtung 15 kann der Halter 6 und somit das Greifelement 1 abgesenkt werden, sodass der thermoplastische Kunststoff 3 in Kontakt mit dem Objekt 2 gelangen kann. Darüber hinaus kann in einem Greifzustand des thermoplastischen Kunststoffs 3 mittels der Verfahreinrichtung 15 das Objekt 2 von der in Figur 7 dargestellten Istposition in eine in den Figuren nicht dargestellte Sollposition verfahren werden. Die Verfahreinrichtung 15 kann mittels einer elektrischen Leitung 14 mit der Steuervorrichtung 13 verbunden sein.

Die Steuervorrichtung 13 kann über die elektrischen Leitungen 14 Steuerbefehle an die zuvor genannten Bauteile übermitteln. Insbesondere kann mittels der Steuervorrichtung 13 der Aufheizvorgang oder Abkühlvorgang des thermoplastischen Kunststoffs 3 gesteuert oder geregelt werden. Darüber hinaus kann mittels der Steuervorrichtung 13 auch die Bewegung des Halters 6 und somit des Greifelements 1 gesteuert oder geregelt werden.

### Bezugszeichenliste:

- 1: Greifelement
- 2: Objekt
- 3: thermoplastische Kunststoff
- 4: Heizelement
- 5: Thermoplasthalter
- 6: Halter
- 7: Peltierelement
- 8: weitere Kühleinrichtung
- 9: Kühlkörper
- 10: Greifvorrichtung
- 11: Hohlraum
- 12: Verfahreinrichtung
- 13: Steuervorrichtung
- 14: elektrische Leitung
- 15: Verfahreinrichtung
- 16: T-förmiger Endabschnitt
- 17: Hohlraum
- 18: Kühlrippen
- R: Verschieberichtung
- Q: Wärme

## Patentansprüche

1. Greifelement (1) zum Greifen eines Objekts (2), mit einem thermoplastischen Kunststoff (3), der von einem Ausgangszustand, bei dem keine kraft- und/oder formschlüssige Verbindung zwischen dem thermoplastischen Kunststoff (3) und dem Objekt (2) besteht, in einen Greifzustand, bei dem eine kraft- und/oder formschlüssige Verbindung zwischen dem thermoplastischen Kunststoff (3) und dem Objekt (2) besteht, und von dem Greifzustand zurück in den Ausgangszustand überführbar ist.

2. Greifelement (1) nach Anspruch 1, **dadurch gekennzeichnet, dass**
a. beim Überführen in den Greifzustand das Objekt (2) mit dem thermoplastischen Kunststoff (3) in Kontakt bringbar ist oder dass
b. beim Überführen in den Greifzustand das Objekt (2) mit dem thermoplastischen Kunststoff (3) in Kontakt bringbar ist, wobei beim in Kontakt bringen das Objekt (2) einen Materialabschnitt des thermoplastischen Kunststoffs (3) verdrängt und/oder dass
c. der thermoplastische Kunststoff (3) ein thermoplastischer Kunststoff (3) mit Formgedächtniseigenschaft ist.

3. Greifelement (1) nach Anspruch 1 oder 2, **dadurch gekennzeichnet, dass** das Greifelement (1) ein Heizelement (4) zum Aufheizen des thermoplastischen Kunststoffs (3) aufweist, insbesondere dass
a. das Heizelement (4) als Heizdraht ausgebildet ist und/oder dass
b. sich das Heizelement (4) wenigstens teilweise durch den thermoplastischen Kunststoffs (3) erstreckt.

4. Greifelement (1) nach einem der Ansprüche 1 bis 3, **dadurch gekennzeichnet, dass**
a. der thermoplastische Kunststoff (3) einen wärmeleitenden Füllstoff aufweist und/oder dass
b. der thermoplastische Kunststoff (3) Graphitfasern aufweist und/oder dass
c. das Greifelement einen Thermoplasthalter (5) zum Halten des thermoplastischen Kunststoffs (3) aufweist, insbesondere dass der thermoplastische Kunststoff (3) mit dem Thermoplasthalter (5) fest verbunden ist, und/oder dass
d. der thermoplastische Kunststoff (3) ein Paraffin ist.

5. Greifelement (1) nach einem der Ansprüche 1 bis 4, **gekennzeichnet durch** ein Antiadhäsionsmittel zum Verhindern einer Adhäsion zwischen dem thermoplastischen Kunststoff (3) und dem Objekt (2), insbesondere dass
a. das Antiadhäsionsmittel den thermoplastischen Kunststoff (3) wenigstens teilweise ummantelt und/oder dass
b. der thermoplastische Kunststoff (3) mit dem Antiadhäsionsmittel wenigstens teilweise beschichtet ist.

6. Greifvorrichtung (10) mit einem Greifelement (1) nach einem der Ansprüche 1 bis 5 und einem Halter (6), **dadurch gekennzeichnet, dass** das Greifelement (1) mit dem Halter (6) wirkverbunden ist, insbesondere dass der Thermoplasthalter (5) mit dem Halter (6) wieder lösbar wirkverbunden ist.

7. Greifvorrichtung (10) nach Anspruch 6, **gekennzeichnet durch** eine Kühleinrichtung zum Kühlen des Greifelements (1), insbesondere des thermoplastischen Kunststoffs (3), und/oder durch eine Heizeinrichtung zum Heizen des Greifelements (1), insbesondere des thermoplastischen Kunststoffs (3), insbesondere dass ein Peltierelement (7) vorhanden ist, das als Heizeinrichtung und/oder Kühleinrichtung fungiert.

8. Greifvorrichtung (10) nach Anspruch 6 oder 7, **gekennzeichnet durch**
a. eine weitere Kühleinrichtung (8) oder durch eine weitere Kühleinrichtung (8), die einen Lüfter aufweist, und/oder durch
b. einen Kühlkörper (9), der mit dem Greifelement (1) wärmeleitend verbunden ist, insbesondere dass der Kühlkörper (9) mit dem Halter (6) wirkverbunden ist und/oder dass der Kühlkörper (9) wenigstens teilweise in einem Hohlraum (11) des Halters (6) angeordnet ist und/oder dass die weitere Kühleinrichtung (8) derart angeordnet und ausgebildet ist, dass sie den Kühlkörper (9) kühlt.

9. Greifvorrichtung (10) nach einem der Ansprüche 6 bis 8, **gekennzeichnet durch** eine Verfahreinrichtung (12) zum Verfahren des Halters (6).

10. Greifvorrichtung (10) nach einem der Ansprüche 6 bis 9, **gekennzeichnet durch** eine Steuervorrichtung (13) zum Steuern der Heizeinrichtung und/oder der Kühleinrichtung und/oder der weiteren Kühleinrichtung (8) und/oder des Heizelements (4) und/oder der Verfahreinrichtung (12), insbesondere dass die Steuervorrichtung (13) veranlasst, dass
a. beim Überführen des thermoplastischen Kunststoffs (3) von dem Ausgangszustand in den Greifzustand ein Aufheizen des thermoplastischen Kunststoffs (3) und ein in Kontakt bringen des thermoplastischen Kunststoffs (3) mit dem Objekt (2) erfolgt und/oder ein Abkühlen des thermoplastischen Kunststoffs (3) erfolgt, und/oder dass
b. beim Überführen des thermoplastischen Kunststoffs (3) von dem Greifzustand in den Ausgangszustand ein Aufheizen des thermoplastischen Kunststoffs (3) und ein Lösen des thermoplastischen Kunststoffs (3) von dem Objekt (2) erfolgt.

11. Verfahren zum Greifen eines Objekts unter Verwendung eines Greifelements (1) nach einem der Ansprüche 1 bis 5 oder einer Greifvorrichtung (10) nach einem der Ansprüche 6 bis 10.

12. Verfahren zum Greifen eines Objekts (2), insbesondere nach Anspruch 11, mittels eines Greifelements (1), das einen thermoplastischen Kunststoff (3) aufweist, wobei das Verfahren folgende Schritte aufweist:
a. Überführen des thermoplastischen Kunststoffs (3) von einem Ausgangszustand, bei dem keine kraft- und/oder formschlüssige Verbindung zwischen dem thermoplastischen Kunststoff (3) und dem Objekt (2) besteht, in einen Greifzustand, bei dem eine kraft- und/oder formschlüssige Verbindung zwischen dem thermoplastischen Kunststoff (3) und dem Objekt (2) besteht, und
b. Überführen des thermoplastischen Kunststoffs (3) von dem Greifzustand zurück in den Ausgangszustand.

13. Verfahren nach Anspruch 11 oder 12, **dadurch gekennzeichnet, dass**
a. beim Überführen des thermoplastischen Kunststoffs (3) von dem Ausgangszustand in den Greifzustand der thermoplastische Kunststoff aufgeheizt wird und der thermoplastische Kunststoff (3) mit dem Objekt (2) in Kontakt gebracht wird und/oder der thermoplastische Kunststoff (3) zum Herstellen einer kraft- und/oder formschlüssigen Verbindung zwischen dem thermoplastischen Kunststoff (3) und dem Objekt (2) abgekühlt wird und/oder dass
b. eine kraft- und/oder formschlüssige Verbindung zwischen dem thermoplastischen Kunststoff (3) und dem Objekt (2) durch Steuern oder Regeln der Temperatur des thermoplastischen Kunststoffs realisiert wird.

14. Verfahren nach einem der Ansprüche 11 bis 13, **dadurch gekennzeichnet, dass** beim Überführen des thermoplastischen Kunststoffs (3) von dem Greifzustand zurück in den Ausgangszustand der thermoplastische Kunststoff (3) aufgeheizt und der Kontakt zwischen dem thermoplastischen Kunststoff (3) und dem Objekt (2) gelöst wird.

15. Verfahren nach Anspruch 13 oder 14, **dadurch gekennzeichnet, dass**
a. der thermoplastische Kunststoff (3) vor dem Herstellen des Kontakts zwischen dem thermoplastischen Kunststoff (3) und dem Objekt (2) auf eine Temperatur aufgeheizt wird, die größer als eine Glasübergangstemperatur des thermoplastischen Kunststoffs (3) ist und/oder dass
b. der thermoplastische Kunststoff (3) vor dem Lösen des Kontakts zwischen dem thermoplastischen Kunststoff (3) und dem Objekt (2) auf eine Temperatur aufgeheizt wird, die größer als eine Glasübergangstemperatur des thermoplastischen Kunststoffs (3) ist und/oder dass
c. der thermoplastische Kunststoff (3) auf eine Temperatur abgekühlt wird, die unterhalb der Glasübergangstemperatur ist und/oder dass
d. zum Herstellen des Kontakts zwischen dem thermoplastischen Kunststoff (3) und dem Objekt das Greifelement (1) und/oder das Objekt (2) derart bewegt werden, dass das Objekt (2) einen Materialabschnitt des thermoplastischen Kunststoffs (3) verdrängt und/oder in den thermoplastischen Kunststoff (3) eindringt und/oder dass
e. zum Lösen des Kontakts zwischen dem thermoplastischen Kunststoff (3) und dem Objekt das Greifelement (1) und/oder das Objekt (2) derart bewegt werden, dass das Objekt (2) aus dem thermoplastischen Kunststoff (3) heraustritt und/oder keinen Materialabschnitt des thermoplastischen Kunststoffs (3) verdrängt und/oder dass
f. nach dem Herstellen der kraft- und/oder formschlüssigen Verbindung zwischen dem thermoplastischen Kunststoff (3) und dem Objekt (2) das Objekt (2) mittels der Greifvorrichtung (10) zu einer Sollposition transportiert wird.
